# EUROPEAN PATENT APPLICATION

(11) **EP 4 219 222 A1**
(43) Date of publication of application: **02.08.2023**
(21) Application number: 22154509.8
(22) Date of filing: 01.02.2022
(51) Int. Cl.: B60L 53/14, B60L 53/62, B60L 53/63, B60L 53/65, B60L 53/67

(54) **METHOD FOR IMPROVING THE CHARGING PATTERN OF AT LEAST ONE VEHICLE, CORRESPONDING COMPUTER PROGRAM AND DEVICE**

(71) Applicant: Nagravision Sarl, 1033 Cheseaux-sur-Lausanne (CH)
(72) Inventor: WENDLING, Bertrand, 1033 Cheseaux-sur-Lausanne (CH)
(74) Representative: Ipside

(57) **Abstract**

A device method is proposed for improving the charging pattern of at least one vehicle among a plurality of vehicles of a hybrid or electrical type to be charged by corresponding electric charging stations. Such method comprises:
- obtaining (S300) timing information representative of an availability of the vehicle for being charged by a charging station; and
- determining (S320) a charging pattern for charging the vehicle by the charging station based at least on the timing information, the charging pattern being determined for smoothing over time the electric power consumption of the charging stations.

## Description

### 1. FIELD OF THE DISCLOSURE

The field of the disclosure is that of the charging of hybrid or electric vehicles by charging stations.

More specifically, the disclosure relates to a method for improving the charging pattern of such vehicles.

The disclosure can be of interest e.g. for managing a pool of charging stations.

### 2. TECHNOLOGICAL BACKGROUND

As of today, when a driver enters a parking and wants to recharge his hybrid or electric vehicle, he uses a dedicated parking space and electrically connects (or plugs) his vehicle to the charging station associated to the parking space. If relevant, he identifies himself for the cost to be charged on his account if charging is not free. The charging then starts immediately.

However, in particular locations like e.g. in large airport parking, a large number of vehicles of business travellers arrive almost at the same time early in the morning and are connected to charging stations for having the vehicles to be charged when back in the evening. For the Airport facilities, managing such a sudden recharging demand requires more and more power delivery capacity and supply infrastructure as the proportion of electric vehicles increases.

As of today, this might be seen as not being a real problem with regards to the limited percentage of hybrid or electric vehicles, but as this proportion will growth, this will become more and more accurate and problematic as more and more parking places will be fitted with a charging station. Increase of the power supply capacity of parking will not be possible to match a simultaneous demand of 100 or 200 vehicles. Indeed, the lowest but not recommended power of 2,3 kW is too slow and 7,4 kW for most vehicles would result in 740 kwh capacity for 100 vehicles, which corresponds to a huge peak power to be handled by the supply infrastructure.

There is thus a need for improving the charging pattern of hybrid or electric vehicles when a plurality of such vehicles has to be charged by corresponding electric charging stations, in particular for avoiding peak power demand on the supply infrastructure.

### 3. SUMMARY

A particular aspect of the present disclosure relates to a method for improving the charging pattern of at least one vehicle among a plurality of vehicles of a hybrid or electrical type to be charged by corresponding electric charging stations. According to such method, an electronic device executes for said at least one vehicle:
- obtaining timing information representative of an availability of the vehicle for being charged by a charging station; and
- determining a charging pattern for charging the vehicle by the charging station based at least on the timing information, the charging pattern being determined for smoothing over time the electric power consumption of the charging stations.

Indeed, the knowledge of the timing information (e.g. an expected duration of the electrical connection of the vehicle to the charging station or an expected end of such electrical connection) allows determining an improved charging pattern. For instance, when a vehicle is expected to stay longer than the time required for charging its batteries, its charging can be postponed at a time the overall power demand on the charging stations is lower in order to smooth over time the electric power consumption of the charging stations. This allows avoiding peak power demand on the supply infrastructure of the charging stations.

In some embodiments, the electronic device executes: controlling the charging station for charging the vehicle according to the charging pattern.

Thus, the vehicle is charged according to the improved charging pattern so that the peak power demand on the supply infrastructure of the charging stations is effectively smoothed.

In some embodiments, the obtaining, the determining and the controlling are executed for each vehicle of the plurality of vehicles. At least one charging pattern is determined based on the timing information obtained for each vehicle of the plurality of vehicles.

Thus, the charging pattern is determined more accurately by taking into account the timing information of the other vehicle to be charged. This improves the smoothing of the peak power demand on the supply infrastructure of the charging stations.

In some embodiments, the charging pattern for charging the vehicle comprises at least one of:
- a delay in the start of the charging of the vehicle relative to the time the vehicle is electrically connected to the charging station;
- a split of the charging time over a plurality of time intervals spread over the expected duration of electrical connection of the vehicle to the charging station; and
- a reduction in the electrical power for the charging of the vehicle relative to a maximum electrical power supported by the vehicle for the charging.

Thus, the charging patterns for the vehicles allow smoothing over time the electric power consumption of the charging stations by acting on the time the charging occurs or by acting on the effective electrical power of the charging.

In some embodiments, the obtaining timing information comprises scanning a ticket for an event (e.g. a show, a sport match, a holiday or business stay). The timing information is based on an expected duration and/or an expected end of the event.

For instance, the ticket comprises a barcode, a QR (for "Quick Response") code or a JAB (for "Just Another Bar") code, scanned by an optical reader of the charging station. The timing information is directly derived from the information relating to the event.

In some embodiments, the obtaining timing information comprises entering a reservation information for an event. The timing information is based on an expected duration and/or an expected end of the event.

For instance, the reservation information is entered by the driver of the vehicle on input means (e.g. a touchscreen or a microphone) of the charging station. The timing information is directly derived from the information relating to the event.

In some embodiments, the obtaining timing information comprises identifying a given vehicle of the plurality. The timing information is based on data associated to the given vehicle in a memory of the device.

In some embodiments, the identifying the given vehicle comprises at least one of:
- executing a character recognition method on a picture of the number plate of the given vehicle; and
- establishing a wireless communication link with a tracker or a dongle implemented in the given vehicle.

Thus, the identification of the vehicle is automatic.

In some embodiments, the timing information is based on:
- statistics performed on timing information relating to past electrical connections of the given vehicle to the charging stations;
- an output of a machine learning system trained for learning the usage of the given vehicle in term of timing information relating to past electrical connections to the charging stations;
- a parking time associated to a reservation for a parking space of one of the charging stations, the reservation being associated to the given vehicle within the memory of the device; and
- a parking time obtained from a reservation for an event (e.g. a show, a sport match, a holiday or business stay), the reservation being associated to the given vehicle within the memory of the device.

Thus, the timing information is directly derived from the reservation made for parking the vehicle on a parking space of one of the charging stations, or is derived from the habits of the driver of the vehicle, or is derived from a reservation for an event (e.g. the timing information is based on an expected duration and/or an expected end of such event).

In some embodiments, the electronic device executes: obtaining charging requirements information for charging the vehicle. The determining the charging pattern for charging the vehicle being also based on the charging requirements information.

Thus, the charging pattern is determined more precisely by also taking into account for the requirements of the vehicle in term of charging (e.g. full charge or not, allowable maximum peak charging power).

Another aspect of the present disclosure relates to a computer program product comprising program code instructions for implementing the above-mentioned method for improving the charging pattern of at least one vehicle (in any of the different embodiments discussed above), when said program is executed on a computer or a processor.

Another aspect of the present disclosure relates to a device configured for implementing all or part of the steps of the above-mentioned method for improving the charging pattern of at least one vehicle (in any of the different embodiments discussed above). Thus, the features and advantages of this device are the same as those of the corresponding steps of said method. Therefore, they are not detailed any further.

### 4. LIST OF FIGURES

Other features and advantages of embodiments shall appear from the following description, given by way of indicative and non-exhaustive examples and from the appended drawings, of which:
- Figure 1 illustrates vehicles of a hybrid or electrical type to be charged by corresponding electric charging stations according to one embodiment of the present disclosure;
- Figure 2 illustrates an example of the structural blocks that can be implemented in the device of Figure 1;
- Figure 3 illustrates the steps of a method for improving the charging pattern of at least one vehicle of Figure 1 according to one embodiment of the present disclosure;
- Figure 3a illustrates a step implemented during the step of obtaining timing information of the method of Figure 3 according to one embodiment of the present disclosure;
- Figure 3b illustrates a step implemented during the step of obtaining timing information of the method of Figure 3 according to another embodiment of the present disclosure;
- Figure 3c illustrates a step implemented during the step of obtaining timing information of the method of Figure 3 according to yet another embodiment of the present disclosure.

### 5. DETAILED DESCRIPTION

In all of the Figures of the present document, the same numerical reference signs designate similar elements and steps.

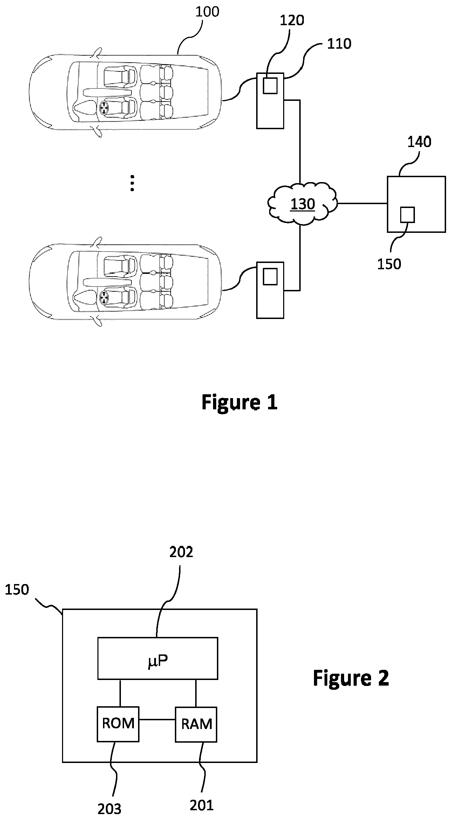

Referring now to **Figure 1**, we describe vehicles 100 of a hybrid or electrical type to be charged by corresponding electric charging stations 110.

For instance, the charging stations 110 are located on a parking area wherein a plurality of such charging stations 110 is implemented and may be managed. Such parking area can be e.g. an airport parking, a stadium parking, a parking of a big company, etc.

More particularly, the charging stations 110 are communicatively connected to a central management server 140 through a communications network 130. Such communications network 130 can be e.g. a local area network based on an ethernet protocol. However, in other embodiments, such communications network 130 can be a wireless local area network, e.g. based on WiFi access points.

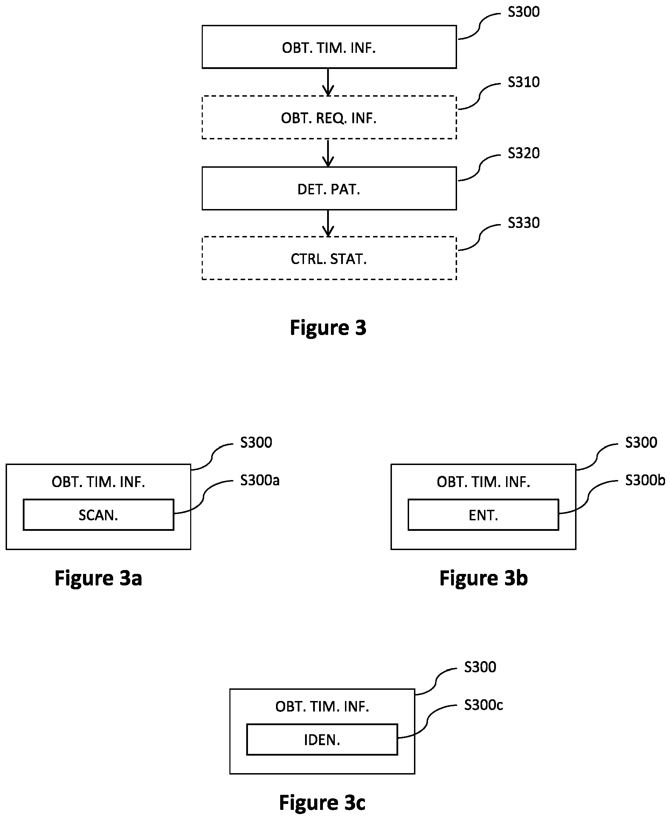

Back to Figure 1, the central management server 140 implements a device 150 that executes the method for improving the charging pattern of at least one vehicle 100 according to the present disclosure (according to any of the embodiments discussed below in relation with Figures 3, 3a, 3b and 3c). In that perspective, the device 150 can control the charging stations through the communications network 130, or retrieve information from the input means 120 (e.g. an optical reader, a camera, a touchscreen, a microphone, etc.) implemented in the charging stations 110. However, in other embodiments, such input means 120 are not implemented directly in the charging stations 110 but are rather implemented as separate entities, while still communicatively connected to the device 150 for being able to provide the corresponding information to the device 150.

In some embodiments, the device 150 is implemented in a given charging station 110, while still in communication with the remaining of the charging stations, e.g. through the communications network 130. In such embodiments, there is no necessarily a dedicated central management server 140.

Back to Figure 1, the vehicles 100 are represented in the form of a car. However, the method for improving the charging pattern of at least one vehicle 100 according to the present disclosure (according to any of the embodiments discussed below in relation with Figures 3, 3a, 3b and 3c) applies equally well to any vehicle 100 of a hybrid or electrical type that needs to be charged by a charging station 110, e.g. a truck, a motorcycle, etc.

In order to be able to implement the method for improving the charging pattern of at least one vehicle 100 according to the present disclosure (according to any of the embodiments discussed below in relation with Figures 3, 3a, 3b and 3c), in some embodiments the device 150 also comprises **(****Figure 2****):**
- a non-volatile memory 203 (e.g. a read-only memory (ROM), a hard disk, a flash memory, etc.);
- a volatile memory 201 (e.g. a random-access memory or RAM) and a processor 202.

The non-volatile memory 203 is a non-transitory computer-readable carrier medium. It stores executable program code instructions, which are executed by the processor 202 in order to enable implementation of some steps of the method for improving the charging pattern of at least one vehicle 100 in the various embodiment discussed below in relation with Figures 3, 3a, 3b and 3c.

Upon initialization, the aforementioned program code instructions are transferred from the non-volatile memory 203 to the volatile memory 201 so as to be executed by the processor 202. The volatile memory 201 likewise includes registers for storing the variables and parameters required for this execution.

The steps of the method for improving the charging pattern of at least one vehicle 100 may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

Referring now to **Figure 3****,** we describe a method for improving the charging pattern of at least one vehicle 100. Some steps of the method are further described in relation with **Figures 3a, 3b and 3c****.**

In a **step S300,** the device 150 obtains timing information representative of an availability of the vehicle 100 for being charged by a charging station 110.

For instance, the timing information comprises an expected duration of the electrical connection of the vehicle 100 to the charging station 110 and/or an expected end of such electrical connection.

In the embodiment of Figure 3a, the step S300 comprises a sub-step S300a wherein a ticket for an event is scanned. This is done for instance by the driver of the vehicle 100 using the input means 120, e.g. an optical reader in that case. In that perspective, the ticket comprises e.g. a barcode, a QR code or a JAB code, scanned by the optical reader for providing information relating to the event. The device 150 thus obtains an expected duration and/or an expected end of the event based on the information scanned on the ticket. Based on such expected duration and/or an expected end of the event, the device 150 obtains the timing information associated to the vehicle 100. For instance, the expected duration of the event is considered as an expected duration of the electrical connection of the vehicle 100 to the charging station 110. In the same way, the expected end of the event is considered as an expected end of the electrical connection of the vehicle 100 to the charging station 110.

Alternatively, in the embodiment of Figure 3b, the step S300 comprises a sub-step S300b wherein a reservation information for an event is entered. This may be done for instance by the driver of the vehicle 100 using the input means 120, e.g. a touchscreen or a microphone in that case. The device 150 thus obtains an expected duration and/or an expected end of the event based on the reservation information. For instance, the expected duration and/or an expected end of the event is associated to the reservation information in a memory 201, 203 of the device 100, e.g. through preloading of those information. Based on such expected duration and/or an expected end of the event, the device 150 obtains the timing information associated to the vehicle 100, for instance in a similar way as described above in relation with the embodiment of Figure 3a.

In the embodiments of Figure 3a and of Figure 3b, the event is e.g. a show, a sport match, a holiday or business stay (e.g. including a round trip by plane or train), etc.

Alternatively, in the embodiment of Figure 3c, the step S300 comprises a sub-step S300c wherein the vehicle 100 is identified. Such identification is done e.g. through the execution of a character recognition method on a picture of the number plate of the given vehicle. Such picture of the number plate may be taken by the input means 120, e.g. a camera in that case. Alternatively, the identification of the vehicle 100 may be done through the establishment of a wireless communication link between the device 150 and a tracker or a dongle implemented in the vehicle 100. Such wireless communication link follows for instance a short-range wireless communications protocol. It can be e.g. a Bluetooth protocol or a Bluetooth Low Energy protocol. The device 150 thus obtains the identification of the vehicle 100 through the exchange of messages of the request and response type, or of the challenge and response type, with the tracker or the dongle implemented in the vehicle 100.

Once the vehicle 100 is identified, the device 150 obtains the timing information as an information associated to the identified vehicle 100 in the memory 201, 203 of the device 150. In some embodiments, such information associated to the identified vehicle 100 in the memory 201, 203 of the device 150 is based on the habits of the driver of the vehicle, e.g. based on:
- statistics performed on timing information relating to past electrical connections of the vehicle 100 to the charging stations 110. For instance, the expected duration of the electrical connection of the vehicle 100 to the charging station 110 is obtained as an average value of the effective past duration of the electrical connection of the vehicle 100 to some of the charging stations 110. The same may be done for the expected end of the electrical connection of the vehicle 100 to the charging station 110; or
- an output of a machine learning system trained for learning the usage of the vehicle 100 in term of timing information relating to past electrical connections to the charging stations 110.

In other embodiments, the information associated to the identified vehicle 100 in the memory 201, 203 of the device 150 is based on a parking time associated to a reservation for a parking space of one of the charging stations 110. Such reservation is associated to the vehicle 100 within the memory 201, 203 of the device 150. For instance, the expected duration of the electrical connection of the vehicle 100 to the charging station 110 is obtained as the duration of the reservation for the parking space. The expected end of the electrical connection of the vehicle 100 to the charging station 110 may be obtained as the end of the reservation for the parking space.

In other embodiments, the information associated to the identified vehicle 100 in the memory 201, 203 of the device 150 is based on a parking time obtained from a reservation for an event (e.g. a show, a sport match, a holiday or business stay). Such reservation is associated to the vehicle 100 within the memory 201, 203 of the device 150. For instance, the expected duration of the electrical connection of the vehicle 100 to the charging station 110 is obtained as the duration of the event. The expected end of the electrical connection of the vehicle 100 to the charging station 110 may be obtained as the end of the event. According to one illustrative example, the driver of the vehicle 100 has made a reservation for a holiday stay, including a return flight by plane for going to the holiday destination. In connection with the reservation for the holiday stay, the driver has selected as an option a parking space with a charging station 110 for parking his vehicle 100 at the airport during the stay. When making such optional selection, the driver is for instance required to enter the plate number of his vehicle 100. Responsive to the optional selection of the parking space, the device 150, which is in this example associated to a central management server 140 of the charging stations 110 of the parking of the airport, has its memory 201, 203 populated with both the reservation for the holiday stay and the plate number of the vehicle 100. When identifying the vehicle 100 through the recognition of its plate number the device 150 obtains the corresponding timing information based on the reservation associated to the plate number of the vehicle 100 in the memory 201, 203. For instance, the expected duration of the electrical connection of the vehicle 100 to a charging station 110 is obtained as the duration of the holiday stay. The expected end of the electrical connection of the vehicle 100 to the charging station 110 is obtained as the end of the holiday stay (e.g. the date of the return flight).

Back to Figure 3, in a **step S310,** the device 150 obtains charging requirements information for charging the vehicle 100. Such charging requirements information is for instance an information relating to an expected full charge or not, an allowable maximum peak power expected during the charging, etc.

Such charging requirements information is for instance entered by the driver of the vehicle 100 on the input means 120 (e.g. a touchscreen or a microphone) of the charging station 110. Alternatively, the charging requirements information is directly provided by the vehicle 100 to the charging station 110, e.g. through the establishment of a wireless communication link between the charging station 110 and a tracker or a dongle implemented in the vehicle 100, or through the establishment of a wired communication link between the charging station 110 and the vehicle 100 when electrically connected to it (e.g. through the charging cable).

Back to Figure 3, in a **step S320,** a charging pattern for charging the vehicle 100 by the charging station 110 is determined based on the timing information and on the charging requirements information.

However, in some embodiments the step S310 is not implemented and no charging requirements information is considered for determining a charging pattern for charging the vehicle 100 by the charging station 110. In such embodiments, the charging pattern for charging the vehicle 100 is determined based on the timing information obtained for the vehicle 100 during step S300.

Back to Figure 3, in step S320 the charging pattern for the vehicle 100 is determined for smoothing over time the electrical power consumption of the charging stations 110. Such smoothing is decided e.g. when the total electrical power effectively consumed by the charging stations 110 at the time of execution of the step S320 for the vehicle 100 is higher than a predetermined threshold, or when such total electrical power effectively consumed by the charging stations 110 is expected to become higher than the predetermined threshold during the expected duration of the electrical connection of the vehicle 100 to the charging station 110. In those examples, the device 150 has access to the total electrical power effectively consumed by the charging stations 110. However, in other examples, the device 150 simply decides to use all the expected duration of the electrical connection of the vehicle 100 to the charging station 110 to smooth over time the electrical power consumption of the charging stations 110, regardless of the total electrical power effectively consumed by the charging stations 110.

For instance, the charging pattern determined in step S320 for charging the vehicle 100 comprises at least one of:
- a delay in the start of the charging of the vehicle 100 relative to the time the vehicle 100 is electrically connected to the charging station 110;
- a split of the charging time over a plurality of time intervals spread over the expected duration of electrical connection of the vehicle 100 to the charging station 110; and
- a reduction in the electrical power for the charging of the vehicle 100 relative to a maximum electrical power supported by the vehicle 100 for the charging.

Thus, the overall power demand on the charging stations 110 is smoothed over time. This allows avoiding peak power demand on the supply infrastructure of the charging stations 110.

In a **step S330**, the device 150 controls the charging station 110 for charging the vehicle 100 according to the charging pattern determined in step S320.

However, the step S330 remains optional. For instance, if the outcome of the step S320 is that there is not particular need for changing the default charging pattern of the vehicle 100, the step S330 may simply not be implemented by the device 150. This occurs e.g. if there is enough electrical power available for suppling the charging patterns at the considered time. Alternatively, the device 150 provides the charging pattern determined in step S320 to a third-party device that is in charge of the control of the charging stations 110 based on the charging patterns provided by the device 150.

In some embodiments, the steps S300, S320 and, in the relevant embodiments, S310 and S330, are executed for each vehicle 100 of the plurality of vehicles 100 to be charged by the charging stations 110. In such case, the charging pattern determined for at least one given vehicle 100 may depend on all or part of the timing information that have been obtained for the vehicles 100 of the plurality of vehicle 100. The charging pattern determined for the given vehicle 100 is thus more accurate in that it takes into account for the information available for other vehicles 100 to be charged by the charging stations 110. In some of those embodiments, the charging pattern for each of the vehicles 100 to be charged is determined based on the timing information obtained for all the vehicles 100 of the plurality of vehicle 100 to be charged.

## Claims

1. Method for improving the charging pattern of at least one vehicle (100) among a plurality of vehicles of a hybrid or electrical type to be charged by corresponding electric charging stations (110),
**characterized in that** an electronic device (150) executes for said at least one vehicle:
- obtaining (S300) timing information representative of an availability of the vehicle for being charged by a charging station; and
- determining (S320) a charging pattern for charging the vehicle by the charging station based at least on the timing information, the charging pattern being determined for smoothing over time the electric power consumption of the charging stations.

2. Method according to claim 1, wherein the electronic device executes:
- controlling (S330) the charging station for charging the vehicle according to the charging pattern.

3. Method according to claim 1 or 2, wherein said obtaining, said determining and said controlling are executed for each vehicle of the plurality of vehicles,
and wherein at least one charging pattern is determined based on the timing information obtained for each vehicle of the plurality of vehicles.

4. Method according to any of the claims 1 to 3, wherein the charging pattern for charging the vehicle comprises at least one of:
- a delay in the start of the charging of the vehicle relative to the time the vehicle is electrically connected to the charging station;
- a split of the charging time over a plurality of time intervals spread over the expected duration of electrical connection of the vehicle to the charging station; and
- a reduction in the electrical power for the charging of the vehicle relative to a maximum electrical power supported by the vehicle for the charging.

5. Method according to any of the claims 1 to 4, wherein said obtaining timing information comprises scanning (S300a) a ticket for an event, the timing information being based on an expected duration and/or an expected end of the event.

6. Method according to any of the claims 1 to 4, wherein said obtaining timing information comprises entering (S300b) a reservation information for an event, the timing information being based on an expected duration and/or an expected end of the event.

7. Method according to any of the claims 1 to 4, wherein said obtaining timing information comprises identifying (S300c) a given vehicle of the plurality, the timing information being based on data associated to the given vehicle in a memory of the device.

8. Method according to claim 7, wherein said identifying the given vehicle comprises at least one of:
- executing a character recognition method on a picture of the number plate of the given vehicle; and
- establishing a wireless communication link with a tracker or a dongle implemented in the given vehicle.

9. Method according to claim 7 or 8, wherein the timing information is based on:
- statistics performed on timing information relating to past electrical connections of the given vehicle to the charging stations;
- an output of a machine learning system trained for learning the usage of the given vehicle in term of timing information relating to past electrical connections to the charging stations;
- a parking time associated to a reservation for a parking space of one of the charging stations, the reservation being associated to the given vehicle within the memory of the device; and
- a parking time obtained from a reservation for an event, the reservation being associated to the given vehicle within the memory of the device.

10. Method according to claim 5 or 6 or 9, wherein the event belongs to the group comprising:
- a show;
- a sport match; and
- a holiday or business stay.

11. Method according to any of the claims 1 to 10, wherein said electronic device executes:
- obtaining (S310) charging requirements information for charging the vehicle; said determining the charging pattern for charging the vehicle being also based on said charging requirements information.

12. Computer program product comprising program code instructions for implementing a method according to any of the claims 1 to 11.

13. Device (150) for improving the charging pattern of at least one vehicle (100) among a plurality of vehicles of a hybrid or electrical type to be charged by corresponding electric charging stations (110),
**characterized in that** it comprises a processor (202) or a dedicated computing machine configured for, for said at least one vehicle:
- obtaining timing information representative of an availability of the vehicle for being charged by a charging station; and
- determining a charging pattern for charging the vehicle by the charging station based at least on the timing information, the charging pattern being determined for smoothing over time the electric power consumption of the charging stations.
